# EUROPEAN PATENT APPLICATION

(11) **EP 3 147 111 A1**
(43) Date of publication of application: **29.03.2017**
(21) Application number: 15425072.4
(22) Date of filing: 25.09.2015
(51) Int. Cl.: B29C 70/52, B29C 70/86

(54) **METHOD AND APPARATUS FOR PRODUCING SENSORIZED PULTRUTED RODS**

(71) Applicant: CONSORZIO CETMA, 72100 Brindisi (IT); ENEA, 00196 Roma (IT)
(72) Inventor: Coricciati, Angela, 73010 Soleto (LE) (IT); Largo, Alessandro, 73020 Cutrofiano (LE) (IT); Caponero, Michele Arturo, 00047 Marino (RM) (IT); Corvaglia, Paolo Antonio, 73100 Lecce (LE) (IT); Maddaluno, Giona, 80067 Sorrento (NA) (IT)
(74) Representative: Bruni, Giovanni

(57) **Abstract**

Modified pultrusion process finalized to the insertion of wired sensors or actuators in composite components (10) manufactured by pultrusion technique and device therefore.

## Description

An innovative process aimed at the insertion of wired sensors or actuators inside composite components manufactured by pultrusion technique is the object of the present document. In details, the method object of invention concerns the insertion of sensors or actuators in a traditional manufacture line for pultruded components, usually called "in continuous series".

At the current status of the technique, the traditional bars in composite material, manufactured by pultrusion process, are mostly used in civil applications with the aim of obtaining a structural reinforcement; on the other hand, sensorization of these bars, using wired sensors or actuators, should permit, in addition to the "traditional" reinforcement, also the contemporary structural monitoring, with a particular reference to the strain, tension and thermal status of the structure object of investigation. Besides it's also known that the traditional industrial process used for the manufacture of bars (with improved adherence) to be used as reinforcement is a process that differs from the traditional pultrusion process (where resin polymerization occurs in a spinneret which has the shape of the profile to be manufactured). A way (probably the most common one) of obtaining the adherence effect is by shaping the bundle of fibers, wet by resin, in the wanted quantities and percentages, using a winding of a suitably tensioned wire, putting off the cure phase of the bar to an oven positioned downstream. Such bar, obtained with the above-mentioned process, does not include wired sensors or actuators, which could not be implemented neither in phases successive to bar manufacture by pultrusion process, because the insertion of both sensors and actuators inside the bar would fail. Obviously the same limitation is extended to bars obtained by a traditional pultrusion process because, in the case of traditional process, the adherence effect is typically obtained by a successive application of layers of granulates, applied by resin.

On the contrary, the current invention aims at overcoming the disadvantages connected to the well-known pultrusion process in continuous series, both in the traditional and in the modified version, being about a pultrusion process further modified by the insertion, in the production line, of an additional modulus that permits the sensor positioning inside the not yet consolidated bar. Therefore the declared aim of the current invention is obtaining an innovative pultrusion process, aimed at the insertion of wired sensors and actuators in composite components, characterized in that the insertion of the above mentioned sensors is realized by the installation, in the manufacture line, of an additional modulus compatible with the pultrusion technology and that could be disabled in order to permit the manufacture of traditional not sensorized components.

The mentioned advantages, together with further ones, will emerge from the detailed description of the invention in a preferential realization, absolutely not restrictive, with reference to the enclosed tables:
- Figure 1 shows an exemplary scheme relative to the traditional pultrusion process (in continuous series) for the manufacturing of composite material bars;
- Figure 2 shows an exemplary scheme relative to the modified pultrusion process object of invention for the manufacturing of composite materials bars provided with an integrated sensor;
- Figures 3a, 3b and 3c show some details about the phases of the process relative to the insertion of the sensor using the additional modulus and concerning the different lowering portions of the specific additional modulus to be used for sensor or actuator insertion;
- Figure 4 shows a detail of the additional modulus 3' positioned at the end of the spinneret and upstream the winder, where the guide needle tube and the sensor to be inserted inside the pultruded bar not consolidated yet are visible.

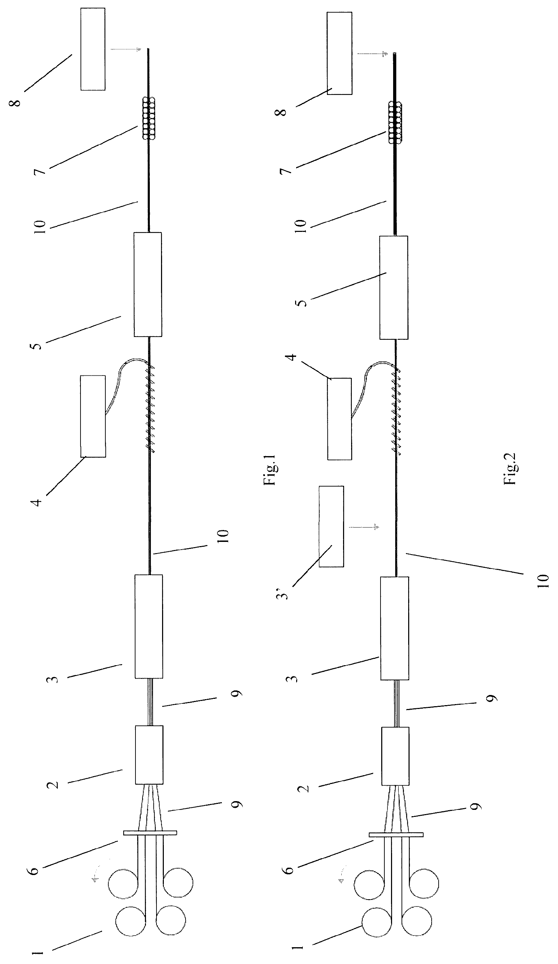

As previously said, and as can be deduced from fig. 1, the traditional process for the manufacturing of bar by pultrusion needs a succession of phases in continuous that starts from the taking of reinforcement fibers 9, in a dry form, from a creel 1, and continues with a successive transition of the same fibers in an impregnation resin bath 2. Successively, the impregnated fibers 9 are passed in a pre-molding station 3, made by a not heated spinneret (at which ingress the resin in excess is removed) that gives to the draw piece 10, using a certain pressure, the desired dimensions, by pressing and compacting the fibers. After the transition in the spinneret 3, an helical winding of fibers, opportunely wet in station 4 (or, in general, other possible secondary processing, like the improved adherence which is a not restrictive example), is realized on the pultruded material, in order to give the bar an efficient surface adherence and, once applied the helical winding, the entire piece is passed inside an oven 5, in order to permit the cure process of the bar. At last, the consolidated product, so obtained, is firstly cooled, successively passed inside a throw section 7 composed by a plurality of rolls till arriving to a special cutting zone 8, where the bar cutting, of the desired dimensions, will be made by diamond blades.

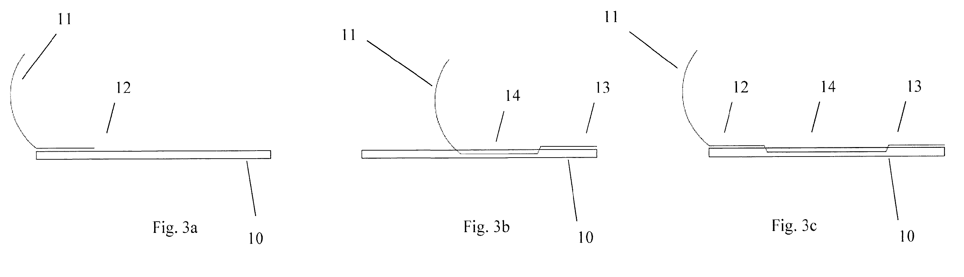

In fig. 2, instead, the exemplary scheme of the manufacture process of sensorized pultruded bars, object of the current invention, is shown. In order to simplify the description and in a not restrictive way, we refer to a pultrusion process which includes the insertion of a sensor made by a single optical fiber inserted inside the bar 10. The innovative pultrusion process, as shown in fig. 2, is almost the same as that in continuous series, well known and schematically shown in fig. 1, but for the introduction of an additional station 3' for the application of the sensor (for example an optical fiber). Always in reference to fig. 2, the additional modulus 3' is placed at the exit of the spinneret 3 before proceeding in the station 4 for the performing of possible secondary processing such as, for example, the application of the helical winding on the draw piece material 10. As one can see in the details of figures 3a, 3b and 3c, this additional modulus 3' includes a specific guide accessory 11 that, in case of the preferential example, is considered to be a guide tube opportunely needle shaped, having an internal diameter sufficiently high to permit to the opportunely wired sensor or actuator to be passed inside. In the preferential manufacture, absolutely not restrictive, the needle 11 could have, for example, an almost bent shape and could be directed with an opportune slope, in order to facilitate the positioning of the sensor, avoiding its rupture inside the not yet consolidated bar. Particularly, the additional modulus 3' has to be studied in order to permit the lowering of the needle 11 at two different depths, for the functionalities that will be described successively.

Therefore, with reference to figures from 2 to 4, the main phases of the pultrusion process, object of the present invention, envisage the following steps:
(i) positioning of supply section 1 (creel) of dry structural fibers 9 (for example, reinforcement fibers of glass, carbon, Kevlar, etc.);
(ii) impregnation of the dry structural fibers 1, opportunely tensioned, by the transition in a resin bath 2 and directioning of the these fibers with a system of guides and eyelets;
(iii) introduction of the impregnated structural fibers in the spinneret 3 (cold gage) in order to manufacture, with applied pressure, the not consolidated bar 10 with the desired dimensions and shape;
(iv) positioning of the additional modulus 3' for sensor supply at the exit from the spinneret 3 and upstream the winder 4;
(v) insertion of the optical fiber sensor (or of the opportunely wired actuator), suitably protected in correspondence of the two ends, inside the additional modulus 3';
(vi) needle lowering 11 in a first position (fig. 3a), in a way that the optical fiber sensor is positioned along the directrix of the bar and in a way that permits to lap its surface. For this first part 12, the optical fiber sensor must have been previously pre-inserted inside the Teflon little tube (of about 400÷500 µε) for a length of about 0.5m, in order to avoid the sticking of the sensor to the resin of the pultruded bar and, consequently, in order to make much easier the successive recovery of the sensor itself. The final parts of the ends 12 and 13, in fact, will be useful for the successive manufacturing of the optical connections, in a different part of the plant. In alternative, instead of preventively preparing the sensor, partially pre-inserted inside the protective little tube, one can opt for the application of an opportune product such as, for example, a liquid or a material like a detaching sheet (for simplicity not represented), always for a length equal to 0.5m, on the surface of the pultruded bar and in correspondence of the interface between the bar and the optical fiber sensor, right after the exit from the spinneret;
(vii) needle lowering 11 in a second position (fig. 3b), in a way that the bare optical fiber sensor will be positioned inside the bar (central part 14), at a depth and for a length previously predetermined;
(viii) once manufactured the sensorized pultruded bar 10 of the decided length, needle rise 11 in the first position (fig. 3c) so that, in correspondence also of the second end 13, the sensor will be positioned on the surface and along the directrix of the bar for a length of about 0.5m, again with the aim of recovering the optical fiber sensor for the successive manufacturing of the optical connections. Also for this phase, the further considerations made in point (vi) about the positioning of a detaching sheet in the end zones 12 and 13 are applicable;
(ix) Application of an helical winding of wet reinforcement fibers, with the aim of creating bar with improved adherence in station 4. Besides, this winding must not be made in the parts 12 and 13 positioned at the ends of the bar, in other terms along those parts where the optical fiber sensor, both in case of application with the protective little tube and in case of application with detaching sheets, has to lap the surface of the bar itself. About that, one can think about using two different winding speeds: a lower one for the part in correspondence of pigtails 12 and 13 and a higher one for the part 14 in correspondence of the entire bar length;
(x) Cure of the entire bar 10 in an oven 5;
(xi) Cooling and transition of the bar 10 in the throw section 7;
(xii) Pigtails recovery and bar cutting in the station 8;
(xiii) Manufacture, in a separated zone from the plant, of the optical fiber sensor connections, in correspondence of the two ends 12 and 13.

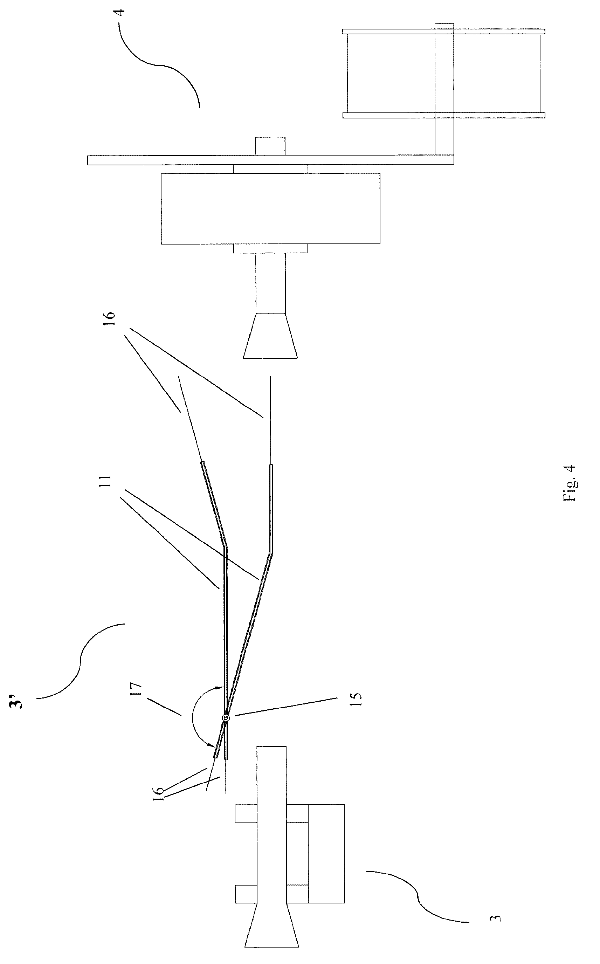

With reference to fig. 4, the additional modulus 3' is made by a guide tube 11 opportunely shaped (needle), hinged so that the position of the hinge axis 15 is adjustable. The step (iv) of the just described process foresees that this guide tube 11 could have two possible operating positions, set by a proper actuator: supply and disengagement. The disengagement position, by which sensor positioning on the surface and externally to the pultruded bar is guaranteed, is set in correspondence of pigtail manufacturing (that is along parts 12 and 13 shown in fig. 3a, 3b, 3c). The supply position, by which the positioning of the sensor inside the pultruded bar (along the part 14) is guaranteed, is set during bar "sensorization" phase, that is during the insertion of sensor 16 inside the bar in depth. During the pultrusion process as a whole, the production line is temporarily stopped in correspondence of the additional modulus 3', with the aim of permitting the execution of the operations listed in the following. Upstream the additional modulus 3', after the stop of the line for few seconds, the guide tube 11 (needle) is positioned in disengagement position, automatically and simultaneously at the momentary stop of the machine, planned at appropriate intervals, corresponding to pigtails manufacturing; successively, sensor 16, previously ready-made (with the addition of a protective little tube in correspondence of the two ends, for pigtails manufacturing), is withdrawn from an appropriate supply section (made by ready-made bobbins and/or by segments of ready-made sensors according to the desired bar length to be manufactured) and inserted inside the guide tube 11 (needle); successively, the ready-made sensor 16 is positioned, optionally with the aid of an operator, for the part of the sensor 16 previously pre-inserted inside the protective little tube, along the external directrix 12 of the bar 10, with the aim of hiving off the sensor from the bar for the successive pigtails recovery; the guide tube 11 (needle) is enabled, automatically, in the supply position and the line is restarted; the ready-made sensor 16, for its part of length without protective little tube, is inserted inside the bar 10 along the part 14; successively the guide tube 11 (needle) is again positioned automatically in disengagement position and the ready-made sensor 16 is positioned, for the second part of the sensor previously pre-inserted inside the protective little tube, along the external directrix of the bar 10 along the part 13 for the manufacturing of the second pigtail; at last, the bar goes through the winder 4 and the operator manually extracts the part of sensor 16, previously inserted inside the protective little tube, from the fiber winding, in order to facilitate pigtails recovery.

Again, as one can see from fig. 4, it is evident that the corner 17, positioned between the above mentioned disengagement and supply sections will be fixed, while the hinge position 15 of the guide tube could be adjustable as a function of the bar diameter and of sensor inserting position during the supply phase.

From the detailed description of the proposed innovative pultrusion process a further advantage is evident. In fact, the adoption of the additional modulus 3', including the needle 11, could be made on standard pultrusion plants (as the one schematically shown in fig. 1) thus resulting absolutely compatible with them. The additional modulus 3' could be easily installed within a standard manufacture line without radical changes from a logistics point of view. Besides, the above mentioned additional modulus 3' implemented in a standard pultrusion line could be disabled or not on the basis of needs, permitting, in this way, to obtain a final product provided (or not provided) of suitable sensors according to the desired needs.

## Claims

1. Modified pultrusion process for the insertion of a plurality of wired sensors (16) or actuators elements inside composite components, applicable on a production line of pultruded bars including, besides, an additional modulus (3') and at least a guide accessory (11), this process **characterized by** the following phases:
(i) positioning of an additional modulus (3') for sensor supply at the exit from the spinneret (3);
(ii) sensor (16) insertion inside the additional modulus (3');
(iii) lowering of the guide accessory (11) in a first disengagement position, in correspondence of the first end (12) so that the sensor (16) is positioned along a directrix of the bar and could lap its surface;
(iv) lowering of the guide accessory (11) in a second supply position, so that the bare sensor (16) or the wired actuator at its ends is positioned inside the bar in correspondence of the central part (14), at a depth and for a length previously predetermined;
(v) rising of the guide accessory (11) in the first position once manufactured the pultruded sensorized bar with the desired length, so that, in correspondence of the second end (13), the terminal sensor wiring is positioned on the surface and along the directrix of the bar (10).

2. Pultrusion process according to claim 1, **characterized in that** said guide accessory (11) is a guide tube shaped as a needle.

3. Modified pultrusion process according to claims 1 and 2, **characterized in that** the sensor element (16) applied on the bar (10) along a directrix of the bar with the lowering of the needle (11) in the first position along the parts positioned in the ends (12) and (13) has to be previously pre-inserted inside a Teflon little tube.

4. Modified pultrusion process according to claims 1 and 2 **characterized in that**, in the end zones (12) and (13) of the bar (10), a detaching sheet is applied on the surface of the pultruded bar (10) in correspondence of the interface between the bar (10) and the sensor (16).

5. Modified pultrusion process finalized to the insertion of a plurality of wired sensors and actuators in composite components according to claims from 1 to 4, **characterized in that** the successive application of an helical winding of wet reinforcement fibers in the station (4) has to be made only in the central part of the bar (14) and not on its ends (12) and (13).

6. Process for the manufacturing of a plurality of bars in composite materials by pultrusion, including a station (3') for the insertion of wired sensors and actuators according to one of the previous claims from 1 to 5, including the following phases, previous to sensor (16) insertion:
(i) positioning of the supply section (1) for the dry structural fibers (9);
(ii) impregnation of the dry structural fibers (1), suitably tensioned, by the transition in a resin bath (2) and their directing by a system of guides and eyelets (6);
(iii) introduction of wet structural fibers in the spinneret (3) in order to manufacture, in pressure conditions, the not consolidated bar (10) with the desired dimensions and shape;
and the following further phases successive to sensor (16) insertion:
(iv) application of an helical winding of wet reinforcement fibers, with the aim of manufacturing bars with improved adherence in the station (4);
(v) cure in an oven (5) of the entire bar (10) equipped with a sensor;
(vi) transition of the bar through a throw section (7);
(vii) cooling, pigtails recovery and bar (10) cutting in the station (8);
(viii) manufacturing, in a separated zone of the plant, of optical fiber sensor connections, in correspondence of the two ends.

7. Production line of pultruded bars including an additional modulus (3') and at least a guide accessory (11), apt to implement a process according to one of the preceding claims.
